Europäisches Patentamt

European Patent Office

Office européen des brevets

(19)

(11) **EP 0 973 253 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.⁷: **H03B 28/00**, G06F 1/03

(21) Anmeldenummer: **99112662.4**

(22) Anmeldetag: **02.07.1999**

(54) **Einrichtung zur Erzeugung mehrerer zeitlich verschachtelter phasenkontinuierlicher Signale**

Apparatus for generating a plurality of time-interleaved phasecontinuous signals

Dispositif pour générer plusieurs signaux entrelacés à phase continue

(84) Benannte Vertragsstaaten:
**DE FR GB IT**

(30) Priorität: **16.07.1998 DE 19831927**

(43) Veröffentlichungstag der Anmeldung:
**19.01.2000 Patentblatt 2000/03**

(73) Patentinhaber: **GRUNDIG Aktiengesellschaft 90471 Nürnberg (DE)**

(72) Erfinder: **Bienefeld, Axel, Grundig AG 90762 Fürth (DE)**

(56) Entgegenhaltungen:
**EP-A- 0 305 187        EP-A- 0 469 233
WO-A-96/15584**

**Beschreibung**

Die vorliegende Erfindung betrifft eine Einrichtung zur Erzeugung mehrerer zeitlich verschachtelter, abschnittsweise phasenkontinuierlicher Signale nach dem Prinzip der digitalen Synthese, insbesondere eine Einrichtung zur direkten digitalen Synthese mehrerer phasenkontinuierlicher Signale mit unterschiedlichen Frequenzen.

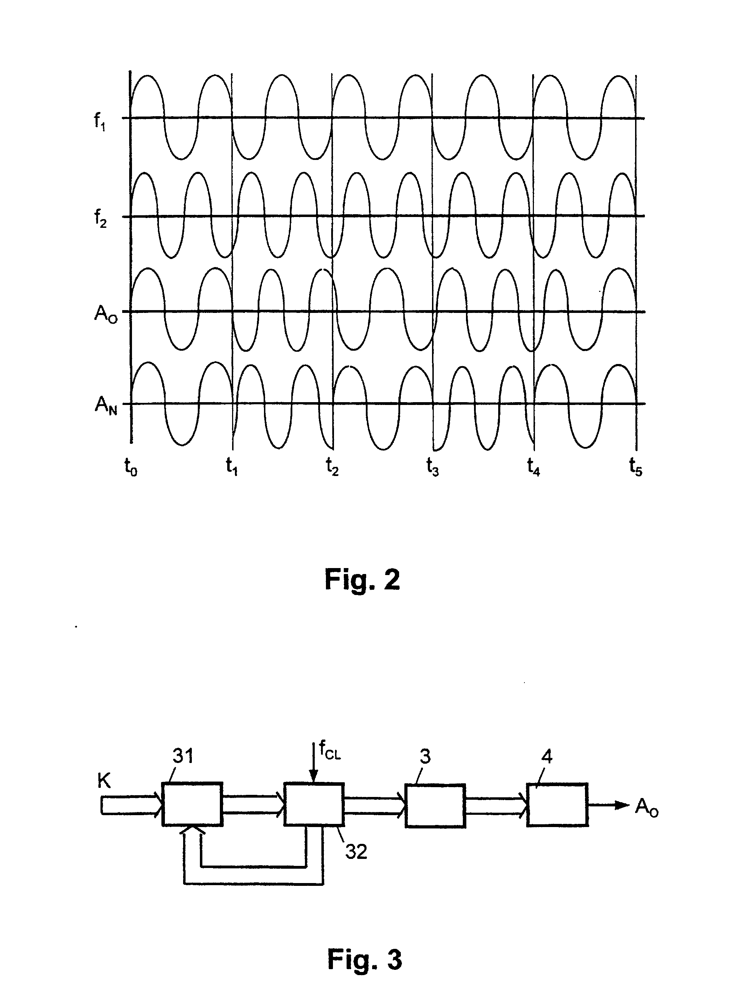

Zur Erzeugung eines Signals mit einer vorgebbaren Frequenz sind Frequenzsyntheseschaltungen bekannt, die nach dem Prinzip der direkten digitalen Synthese arbeiten. Bei der direkten digitalen Synthese wird, wie in Fig. 3 dargestellt, ein Eingangswert K, bei jedem Taktzyklus einer Taktfrequenz $f_{CL}$ von einem Phasenakkumulator 31, 32, der aus einem Addierer 31 und einem Phasenregister 32 realisiert sein kann, der wiederum beispielsweise aus einem Latch bestehen kann, gespeicherten Wert addiert. Der bei der Addition gebildete Wert wird anschließend im Phasenregister 32 gespeichert. Der im Phasenregister 32 gespeicherte Wert dient zur Adressierung einer Tabelle, in der beispielsweise eine Sinus-Funktion abgelegt ist. Die Tabelle kann, wie in Fig. 3 dargestellt, in einem Speicher 3, beispielsweise einem ROM-Speicher, abgelegt sein. Die aus dem ROM 3 ausgelesenen Werte der Sinus-Funktion werden von einem Digital/Analog-Wandler 4 in eine sinusförmige Ausgangsspannung $A_o$ umgesetzt.

Die Frequenz des Ausgangssignals ergibt sich aus:

$$f_0 = (K \, f_{cl}) \, / \, 2^n.$$

Mit n ist in der obigen Formel die Anzahl der Adreßbits des Sinus-Tabellen-Speichers bezeichnet.

Das Ausgangssignal $A_o$ hat somit die gewünschte zu synthetisierende Frequenz, die durch die Größe des Eingangswerts K festgelegt ist.

Soll das Ausgangssignal $A_o$ eine andere Frequenz aufweisen, kann der Eingangswert K verändert werden, wodurch das synthetisierte Ausgangssignal $A_o$ die gewünschte andere Frequenz aufweist.

In Fig. 2 sind zwei mit unterschiedlichen Frequenzen zu synthetisierende Signale $f_1$ und $f_2$ sowie das durch die in Fig. 3 dargestellte Einrichtung zur direkten digitalen Synthese erzeugte Ausgangssignal $A_o$ wiedergegeben. Das Ausgangssignal $A_o$ weist während des Zeitraums $t_0$-$t_1$ die Frequenz $f_1$ auf, während des Zeitruams $t_1$-$t_2$ die Frequenz $f_2$, während des Zeitraums $t_2$-$t_3$ erneut die Frequenz $f_1$ usw. Zur Frequenzänderung wird in der bekannten Einrichtung zur direkten digitalen Synthese der Eingangswert K entsprechend der zu synthetisierenden Frequenz zu den vorgegebenen Zeitpunkten $t_1$ bis $t_4$ geändert.

In Fig. 2 ist deutlich erkennbar, daß das Ausgangssignal $A_o$ von der bekannten Einrichtung zur direkten digitalen Synthese kontinuierlich erzeugt wird.

So wird im Beispiel zum Zeitpunkt $t_1$ von der Frequenz $f_1$ zur Frequenz $f_2$ gewechselt, das Ausgangssignal $A_o$ wird hierbei kontinuierlich ohne Phasensprung fortgesetzt. Wie aus Fig. 2 ersichtlich beinhaltet das Signal $A_0$ mit der Frequenz $f_1$ bei bekannten Syntheseverfahren im Intervall $[t_2, t_3]$ eine andere Phaseninformation, als dies bei einer kontinuierlichen Synthese mit $f_1$ der Fall wäre.

Dies gilt in gleicher Weise für das Signal $A_0$ mit der Frequenz $f_2$ im Intervall $[t_3, t_4]$, usw.

Die bekannte Einrichtung zur direkten digitalen Synthese ist folglich nicht geeignet abwechselnd mehrere Signale unterschiedlicher Frequenz zu erzeugen, wobei die einzelnen Signale sich so verhalten, als ob zwischen zwei kontinuierlich erzeugten Ausgangssignalen mit $f_1$ und $f_2$ umgeschaltet wird..

Aus EP-A-0 305 187 ist ein digitaler Frequenz-Synthesizer bekannt. Dieser Vier-Kanal multifunktionale Frequenz-Synthesizer, welcher eine direkte numerische Synthese zur Erzeugung mindestens eines komplexen Ausgangssignals verwendet, erzeugt das Ausgangssignal mit einer wählbaren Frequenz, Phase, Offset und Amplitude.

Es ist daher Aufgabe der vorliegenden Erfindung, eine Einrichtung zur Erzeugung mehrerer zeitlich verschachtelter phasenkontinuierlicher Signale anzugeben, insbesondere eine Einrichtung zur direkten digitalen Synthese mehrerer zeitlich verschachtelter phasenkontinuierlicher Signale mit unterschiedlichen Frequenzen, welche in der Lage ist ein Ausgangssignal zu erzeugen, das sich so verhält, als ob zwischen mehreren, mindestens zwei, kontinuierlich erzeugten Ausgangssignalen unterschiedlicher Frequenz, umgeschaltet wird.

Bei der erfindungsgemäßen Einrichtung zur Erzeugung mehrerer zeitlich verschachtelter phasenkontinuierlicher Signale, insbesondere einer Einrichtung zur direkten digitalen Synthese mehrerer phasenkontinuierlicher Signale mit unterschiedlichen Frequenzen, wobei die Einrichtung zur Erzeugung mehrerer phasenkontinuierlicher Signale eine erste Einheit zur Erzeugung einer ersten Phaseninformation für ein erstes zu synthetisierendes Signal mit einer ersten vorgebbaren Frequenz aufweist, und die erste Phaseninformation in einer Syntheseeinheit in ein Ausgangssignal umgesetzt wird, wird die Aufgabe durch mindestens eine weitere Einheit zur Erzeugung einer weiteren Phaseninformation für ein weiteres zu synthetisierendes Signal mit einer weiteren vorgebbaren Frequenz und einer Auswahleinheit gelöst, die die erste oder eine weitere Phaseninformation auswählt, wobei die Auswahleinheit mit der Syntheseeinheit verbunden ist und die ausgewählte Phaseninformation an die Syntheseeinheit weiterleitet.

Die Erfindung geht dabei von der Überlegung aus, daß durch die kontinuierliche Erzeugung der Phaseninformation für jedes zu synthetisierende Signal mit unterschiedlicher Frequenz, jedes zu synthetisierende Signal so erzeugt werden kann, als ob es von einem kontinuierlich arbeitenden Oszillator erzeugt werden würde und zwischen diesen Oszillatoren mit einem bestimmten Takt umgeschaltet werden würde.

Der Vorteil der Erfindung liegt insbesondere darin, daß mittels der kostengünstig realisierbaren direkten digitalen Synthese mehrere phasenkontinuierliche Signale unterschiedlicher Frequenz erzeugt werden können.

Weitere Vorteile der vorliegenden Erfindung ergeben sich aus den abhängigen Ansprüchen sowie der nachfolgenden Beschreibung der erfindungsgemäßen Einrichtung anhand von Figuren für ein Ausführungsbeispiel.

Es zeigt

Fig. 1    ein Prinzipschaltbild eines Ausführungsbeispiels einer erfindungsgemäßen Einrichtung zur direkten digitalen Synthese zweier zeitlich verschachtelter phasenkontinuierlicher Signale unterschiedlicher Frequenz,

Fig. 2    den Verlauf der von den Einrichtungen nach Fig. 1 und Fig. 3 synthetisierten Signale, und

Fig. 3    eine aus dem Stand der Technik bekannte Einrichtung zur direkten digitalen Synthese.

Zur Erleichterung des Verständnisses der vorliegenden Erfindung sind in den Figuren nur die Bestandteile der Einrichtung zur direkten digitalen Synthese dargestellt, die im Zusammenhang mit der Erfindung von Bedeutung sind. Mit gleichen Bezugszeichen gekennzeichnete Bestandteile der einzelnen Figuren entsprechen einander.

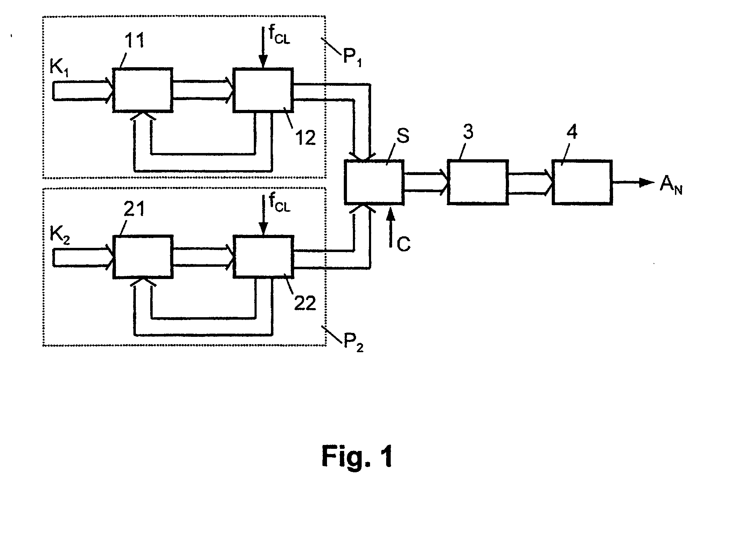

Das Ausführungsbeispiel nach Fig. 1 zeigt eine Einrichtung zur direkten digitalen Synthese von zwei zeitlich verschachtelten, abschnittsweise phasenkontinuierlichen Signalen mit unterschiedlicher Frequenz. Zur Erzeugung der kontinuierlichen Phaseninformationen für die beiden sich in der Frequenz unterscheidenden Signale ist eine erste und eine zweite Einheit $P_1$ und $P_2$ zur Erzeugung der Phaseninformation für das jeweilige Signal vorgesehen. Die Einheit $P_1$ zur Erzeugung der ersten Phaseninformation für das Signal mit einer ersten Frequenz $f_1$ weist einen Addierer 11 und einen damit verbundenen Speicher, das Phasenregister 12, beispielsweise als Latch realisiert, auf. Bei der direkten digitalen Synthese wird ein Eingangswert K, bei jedem Taktzyklus einer Arbeitsfrequenz $f_{CL}$ von dem Addierer 11 mit dem im Phasenregister 12 gespeicherten Wert addiert. Der bei der Addition gebildete Wert wird anschließend im Phasenregister 12 gespeichert und an eine Syntheseeinheit 3, 4 weitergeleitet. Der im Phasenregister 12 gespeicherte Wert dient zur Adressierung einer Tabelle, in der beispielsweise eine Sinus- oder Cosinus-Funktion, oder zumindest ein Teil einer Sinus- oder Cosinusfunktion, abgelegt ist. Die Tabelle kann in einem Speicher 3, beispielsweise einem ROM-Speicher, abgelegt sein. Die in der Einheit zur Erzeugung der Phaseninformation P, erzeugten Werte werden über eine Auswahleinheit S, beispielsweise einen Schalter, an den Speicher 3 weitergeleitet, wo er zur Adressierung der abgelegten Werte der Sinus-Funktion dient. Die aus dem Speicher 3 ausgelesenen Werte der Sinus-Funktion werden von einem Digital/Analog-Wandler 4 in eine sinusförmige Ausgangsspannung $A_N$ umgesetzt. Das Ausgangssignal $A_N$ hat die gewünschte zu synthetisierende erste Frequenz $f_1$, die durch die Größe des Eingangswerts $K_1$ festgelegt ist. Das Ausgangssignal $A_N$ kann beispielsweise mit einer Sampling-Rate vom Digital/Analog-Wandler 4 erzeugt werden, die der Arbeitsfrequenz $f_{CL}$ entspricht.

Die zweite Einheit zur Erzeugung der zweiten Phaseninformation $P_2$ ist wie die erste Einheit $P_1$ aufgebaut. Sie enthält einen Addierer 21 und ein Phasenregister 22, beispielsweise als ein Latch oder ein Speicher realisiert. Die Funktionsweise der zweiten Einheit zur Erzeugung der zweiten Phaseninformation $P_2$ entspricht der Funktionsweise der ersten Einheit zur Erzeugung der ersten Phaseninformation $P_1$. Durch einen Eingangswert $K_2$ wird der Wert der zu synthetisierenden Frequenz $f_2$ festgelegt.

Mittels eines Steuersignals C kann am Schalter S ausgewählt werden, welche der Frequenzen $f_1$ oder $f_2$ aus den ersten oder zweiten Phaseninformationen $P_1$ oder $P_2$ in der Syntheseeinheit 3, 4 synthetisiert wird und am Ausgang $A_N$ zur Verfügung steht.

In Fig. 2 sind die beiden mit den Frequenzen $f_1$ und $f_2$ zu synthetisierenden Signale sowie das Ausgangssignal $A_N$ der erfindungsgemäßen Einrichtung zur direkten digitalen Synthese dargestellt. Das Ausgangssignal $A_N$ weist während des Zeitraums $t_0$-$t_1$ die Frequenz $f_1$ auf, während des Zeit raums $t_1$-$t_2$ die Frequenz $f_2$, während des Zeitraums $t_2$-$t_3$ erneut die Frequenz f, usw. Zur Frequenzänderung des Ausgangssignals wird, wie oben beschrieben, der Schalter S über das Steuersignal C zu den vorgegebenen Zeitpunkten t, bis $t_4$ angesteuert. Dadurch werden während der genannten Zeiträume abwechselnd die Werte der Einheiten zur Erzeugung der Phaseninformationen $P_1$ oder $P_2$ ausgewählt. Da die Einheiten zur Erzeugung der Phaseninformationen $P_1$ oder $P_2$ kontinuierlich betrieben werden, entspricht die Phase des Ausgangssignals $A_N$ der erfindungsgemäßen Einrichtung zur direkten digitalen Synthese der Phase des jeweiligen Signals f, oder $f_2$, wie in Fig. 2 dargestellt. Das erzeugte Ausgangssignal $A_N$ verhält sich damit so, als ob zwischen zwei kontinuierlich arbeitenden Oszillatoren zu den vorgegebenen Zeitpunkten $t_1$ bis $t_4$ umgeschaltet werden würde.

Neben dem in Fig. 1 dargestellten Ausführungsbeispiel für zwei zeitlich verschachtelte abschnittsweise phasenkontinuierliche Signale unterschiedlicher Frequenz können mehr als zwei phasenkontinuierliche Signale unterschiedlicher Frequenz dadurch erzeugt werden, daß für jedes mit einer unterschiedlichen Frequenz zu synthetisierende Signal eine eigene Einheit zur Erzeugung der Phaseninformation vorgesehen wird. Darüber hinaus muß ein Schalter, Bus-Treiber oder Multiplexer vorgesehen werden, der eine Anzahl von Eingänge aufweist, die der Anzahl der zu synthetisierenden Signale entspricht.

**Patentansprüche**

1.  Einrichtung zur Erzeugung mehrerer phasenkontinuierlicher Signale, insbesondere eine Einrichtung zur direkten digitalen Synthese mehrerer phasenkontinuierlicher Signale mit unterschiedlichen Frequenzen, wobei die Einrichtung zur Erzeugung mehrerer phasenkontinuierlicher Signale eine erste Einheit zur Erzeugung einer ersten Phaseninformation ($P_1$) für ein erstes zu synthetisierendes Signal mit einer ersten vorgebbaren Frequenz ($f_1$) aufweist, und die erste Phaseninformation in einer Syntheseeinheit (3,4) in ein Ausgangssignal ($A_N$) umgesetzt wird, wobei mindestens eine weitere Einheit zur Erzeugung einer weiteren Phaseninformation ($P_2$) für ein weiteres zu synthetisierendes Signal mit einer weiteren vorgebbaren Frequenz ($f_2$) vorgesehen ist, und eine Auswahleinheit (S) vorgesehen ist, welche die erste oder eine weitere Phaseninformation ($P_1,P_2$) auswählt, wobei die Auswahleinheit (S) mit der Syntheseeinheit (3,4) verbunden ist und die ausgewählte Phaseninformation ($P_1,P_2$) an die Syntheseeinheit (3,4) weiterleitet, **dadurch gekennzeichnet, dass** die Einheiten zur Erzeugung der Phaseninformationen ($P_1,P_2$) jeweils einen Addierer (11,21) sowie jeweils einen mit dem Addierer (11,21) verbundenen Speicher (12,22) aufweisen und jeweils ein Eingangswert ($K_1,K_2$) vorgesehen ist, der die zu synthetisierende Frequenz ($f_1,f_2$) bestimmt.

2.  Einrichtung nach Anspruch 1, **dadurch gekennzeichnet, dass** die phasenkontinuierlichen Signale zeitlich verschachtelt sind.

3.  Einrichtung nach Anspruch 1, **dadurch gekennzeichnet, dass** die Speicher (11,21) von Latches gebildet werden.

4.  Einrichtung nach einem der Ansprüche 1 bis 3, **dadurch gekennzeichnet, dass** die Syntheseeinheit (3,4) einen Speicher (3) und einen Digital/Analog-Wandler (4) enthält.

5.  Einrichtung nach Anspruch 4, **dadurch gekennzeichnet, dass** der Speicher (3) von einem ROM-Speicher gebildet wird.

6.  Einrichtung nach einem der Ansprüche 4 oder 5, **dadurch gekennzeichnet, dass** im Speicher (3) eine Tabelle gespeichert ist, die einer Funktion, insbesondere einer Sinus- oder Cosinus-Funktion, entspricht.

7.  Einrichtung nach einem der Ansprüche 1 bis 6, **dadurch gekennzeichnet, dass** die Auswahleinheit (S) von einem Schalter, einem Multiplexer oder einer Anordnung von Bus-Treibern gebildet wird.

**Claims**

1.  Device for the generation of a plurality of phase-continuous signals, in particular a device for the direct digital synthesis of a plurality of phase-continuous signals having different frequencies, wherein the device for generating a plurality of phase-continuous signals has a first unit for generating a first phase information item ($P_1$) for a first signal to be synthesized having a first predeterminable frequency ($f_1$), and the first phase information item is converted into an output signal ($A_N$) in a synthesis unit (3, 4) wherein at least one further unit is provided for generating a further phase information item ($P_2$) for a further signal to be synthesized having a further predeterminable frequency ($f_2$), and a selection unit (S) is provided that selects the first or a further phase information item ($P_1$, $P_2$), wherein the selection unit (S) is connected to the synthesis unit (3, 4) and passes the selected phase information item ($P_1$, $P_2$) to the synthesis unit (3, 4), **characterized in that** the units for generating the phase information items ($P_1$, $P_2$) each have an adder (11, 21) and also each have a memory (12, 22) connected to the adder (11, 21), and an input value ($K_1$, $K_2$) is provided in each case that determines the frequency ($f_1$, $f_2$) to be synthesized.

2.  Device according to Claim 1, **characterized in that** the phase-continuous signals are temporally interleaved.

3.  Device according to Claim 1, **characterized in that** the memories (11, 21) are formed by latches.

4.  Device according to any of Claims 1 to 3, **characterized in that** the synthesis unit (3, 4) contains a memory (3) and a digital/analogue converter (4).

5.  Device according to Claim 4, **characterized in that** the memory (3) is formed by an ROM memory.

6.  Device according to either of Claims 4 or 5, **characterized in that** a table that corresponds to a function, in particular a sine or cosine function, is stored in the memory (3).

**7.** Device according to any of Claims 1 to 6, **characterized in that** the selection unit (S) is formed by a switch, a multiplexer or an arrangement of bus drivers.

**Revendications**

**1.** Dispositif pour produire plusieurs signaux à phase continue, notamment un dispositif pour la synthèse numérique discrète de plusieurs signaux à phase continue possédant des fréquences différentes, dans lequel le dispositif pour produire plusieurs signaux à phase continue comporte une première unité pour produire une première information de phase $(P_1)$ pour un premier signal à synthétiser, possédant une première fréquence pouvant être prédéterminée $(f_1)$, et la première information de phase est convertie dans une unité de synthèse (3, 4) en un signal de sortie $(A_N)$, et dans lequel il est prévu au moins une autre unité pour la production d'une autre information de phase $(P_2)$ pour un autre signal à synthétiser possédant une autre fréquence pouvant être prédéterminée $(f_2)$, et il est prévu une unité de sélection (S), qui sélectionne la première ou une autre information de phase $(P_1, P_2)$, l'unité de sélection (S) étant reliée à une unité synthèse (3, 4), et l'information de phase sélectionnée $(P_1, P_2)$ étant transmise à l'unité de synthèse (3, 4), **caractérisé en ce que** les unités de production des informations de phase $(P_1, P_2)$ comprennent respectivement un additionneur (11, 21) ainsi que respectivement une mémoire (12, 22) reliée à l'additionneur (11, 21), et qu'il est prévu respectivement une valeur d'entrée $(K_1, K_2)$, qui détermine la fréquence à synthétiser $(f_1, f_2)$.

**2.** Dispositif selon la revendication 1, **caractérisé en ce que** les signaux à phase continue sont imbriqués temporellement.

**3.** Dispositif selon la revendication 1, **caractérisé en ce que** les mémoires (1, 21) sont formées par des circuits de verrouillage.

**4.** Dispositif selon l'une des revendications 1 à 3, **caractérisé en ce que** l'unité de synthèse (3, 4) contient une mémoire (3) et un transducteur numérique/analogique (4).

**5.** Dispositif selon la revendication 4, **caractérisé en ce que** la mémoire (3) est formée par une mémoire ROM.

**6.** Dispositif selon l'une des revendications 4 et 5, **caractérisé en ce que** dans la mémoire (3) est mémorisé un tableau qui correspond à une fonction, notamment à une fonction sinus ou à une fonction cosinus.

**7.** Dispositif selon l'une des revendications 1 à 6, **caractérisé en ce que** l'unité de sélection (S) est formée par un commutateur, un multiplexeur ou un dispositif formé d'étages d'attaque de bus.

**Fig. 1**

**Fig. 2**

**Fig. 3**